# EUROPÄISCHE PATENTSCHRIFT

(11) **EP 0 552 457 B1**
(45) Veröffentlichungstag und Bekanntmachung des Hinweises auf die Patenterteilung: **02.11.1995**
(21) Anmeldenummer: 92121080.3
(22) Anmeldetag: 05.05.1988
(51) Int. Cl.: B01J 8/12, B01D 53/08, B01D 53/34

(54) **Boden für Wanderbettreaktoren**
Distributor plate for mobile bed reactors
Plaque distributrice destinée à un réacteur à lit mobile

(30) Priorität: 07.05.1987 DE 8706539 U; 26.09.1987 DE 3732567
(43) Veröffentlichungstag der Anmeldung: 28.07.1993
(62) Teilanmeldung aus: 88903836.0
(73) Patentinhaber: GROCHOWSKI, Horst, D-46117 Oberhausen (DE)
(72) Erfinder: GROCHOWSKI, Horst, D-46117 Oberhausen (DE)
(74) Vertreter: Schumacher, Horst, Dr. Dipl.-Phys.

(56) Entgegenhaltungen:
- WO-A-87/00768
- DE-C- 883 598
- DE-C- 914 125
- GB-A- 2 116 869

## Beschreibung

Die Erfindung betrifft einen Boden für Wanderbettreaktoren, sowie ein Verfahren zum Betreiben dieser Vorrichtung.

Wanderbettreaktoren werden für Behandlungen von Fluiden an mehr oder minder feinteiligen Schüttgütern verwendet. Das Schüttgut bildet ein von oben nach unten durch den Reaktor wanderndes Schüttgutbett und wird in den Reaktor oben eingetragen und unten kontinuierlich oder quasi kontinuierlich ausgetragen. Im Bereich des Schüttgutaustrages aus der Behandlungszone ist ein Boden angeordnet, der einerseits - als Abzugsboden - Austrittsöffnungen für das Schüttgut und andererseits - soweit der Reaktor über den Boden auch mit Fluid angeströmt werden soll - Eintrittsöffnungen für das zu behandelnde Fluid aufweist.

Ein Ziel bei solchen Wanderbettreaktoren ist es, eine möglichst gleichmäßige Behandlung des Fluides zu gewährleisten. Dieses Ziel wird einerseits durch besonders gleichmäßige Strömungsverhältnisse des Fluides und andererseits durch möglichst gleichmäßige Wanderverhältnisse des Schüttgutes erreicht. Bei im Gegenstrom betriebenen Wanderbettreaktoren ist ein planparalleles Abziehen aller Schüttgutpartikel besonders schwierig - vor allem dann, wenn das Fluid geeignet ist, den Anströmboden partiell oder sogar ganz zuzusetzen.

Aus der DE-C-883 598 ist ein Anströmboden für Wanderbettreaktoren bekannt, der aus parallel zueinander angeordneten trichterförmigen Schüttgutabzugsrinnen besteht, wobei in den jalousieförmig ausgebildeten Trichterseitenwänden die Jalousieschlitze als Durchtrittsöffnungen für Anströmfluid dienen, welche sich entlang der Rinne erstrecken. Dachförmige Verteilelemente können entweder der Verteilung von Anströmfluid oder lediglich dem Schüttgutabzug dienen, während der Durchgang des gasförmigen Mittels getrennt von dem des Adsorptionsmittels durch den Boden erfolgt. Bei dem bekannten Anströmboden sind die Verteilelemente oberhalb der Mündungsöffnung am Boden der trichterförmigen Rinnen angeordnet.

Ausgehend von dem vorerwähnten Stand der Technik liegt der Erfindung die **Aufgabe** zugrunde, ein planparalleles Abzugsverhalten des Schüttgutes zu gewährleisten und ein besonders vorteilhaftes Verfahren zum Betreiben dieser Vorrichtung anzugeben. Demnach ist also ein optimiertes Feststoff-Abzugsverhalten erwünscht.

Erfindungsgemäß ist die Anordnung der Verteilelemente so gewählt, daß die Verteilelemente an den Innenseiten der Trichter- oder Rinnenseitenwände beginnen und zum Trichter- bzw. Rinneninneren hin abstehen, wobei mehrere Verteilelemente entlang der Trichter- bzw. Rinnenwandung verteilt angeordnet sind. Dadurch entstehen Senken bildende freie Schüttgutoberflächen, wobei diese Senken an den Seitenwänden beginnen und sich zum Trichter- bzw. Rinneninneren hin erstrecken; dabei sind die Verteilelemente (auch) oberhalb der Schüttgutaustrittsmündung angeordnet.

Die Schüttgutabzugstrichter/-rinnen sind vorzugsweise auch hintereinander, insbesondere wabenförmig, bevorzugt flächendeckend angeordnet. Im Falle der Verwendung erster trichterförmiger Schüttgutabzugsrinnen werden vorzugsweise mehrere solcher ersten trichterförmigen Schüttgutabzugsrinnen parallel zueinander angeordnet.

Durch die Lösung nach Anspruch 1 wird u. a. erreicht, daß die Schüttgutpartikel im wesentlichen planparallel abgezogen werden können, ohne daß dadurch eine allzu große Bauhöhe des Bodens oder sonstige aufwendige Konstruktionen in Kauf genommen werden müssen. Durch die konstruktiv besonders einfache Möglichkeit des planparallelen Schüttgutabzuges wird - bei Verwirklichung des Gegenstromverfahrens - die Gleichmäßigkeit der Fluidverteilung ebenfalls gefördert, da alle übereinander liegenden horizontalen Schüttgutpartikelschichten gleichmäßig beladen sind und lokale Nester besonderer Kontamination oder gar Verklebung vermieden werden.

Durch die Erfindung wird ferner erreicht, daß die Querschnitte für den Schüttgutabzug im Vergleich zu dem Wanderbettquerschnitt vorteilhaft klein sein können - und zwar auch in ihrer Summe, daß heißt große Absenktiefen im einzelnen Schüttgutabzugsrohr oder -öffnung nur zu geringen Bettabsenkungen führen.

Ein erfindungsgemäßer Anströmboden hat weiterhin den Vorteil, daß mit ihm eine relativ große Bodenfläche realisiert werden kann. Gleichwohl wird der sogenannte Kernfluß des Schüttgutes am Schüttgutabzug unterbunden. Außerdem kann das Schüttgut im Vergleich zum Rastermaß des Anströmbodens außerordentlich geringe Partikeldurchmesser aufweisen.

Weiterhin werden sogenannte hot-spots in der wandernden Schüttgutschicht ebenfalls unterbunden. Wenn gleich viele Schüttgutzuteilrohre oder -schächte und Schüttgutaustrittsmündungen (zwischen den ersten Schüttgutabzugstrichtern und den Verteilelementen) vorgesehen und versetzt zueinander angeordnet sind, wie dies aus der WO 87/00768 bekannt ist, ist es ferner möglich, mit vorteilhaft kleinen Betthöhen zu arbeiten und relativ große Reaktorquerschnitte zu realisieren, ohne unerwünschte Nebeneffekte in Kauf nehmen zu müssen.

Durch die erfindungsgemäße Anordnung wird ein modularer Aufbau des Anströmbodens ermöglicht, wenn jedes Modul aus einem fertig hergestellten Schüttgutabzugstrichter besteht, der von einer einzigen Person gehandhabt werden und in ein rasterförmiges Traggerüst im Bodenbereich des Wanderbettreaktors eingehängt werden kann. Grundsätzlich ist die Trichterquerschnittsform frei wählbar. Trichterquerschnitte, die eine flächendeckende Anordnung über den gesamten Reaktorquerschnitt gewährleisten, werden jedoch bevorzugt, also z. B. Schüttgutabzugstrichter mit dem Querschnit eines gleichseitigen Dreiecks oder Sechsecks oder solche mit rechteckigem, vorzugsweise quadratischem Querschnitt.

Erfindungsgemäße Schüttgutabzugstrichter werden vorzugsweise aus Metallblech oder auch aus Kunststoffen hergestellt, wobei Verbindungen an Nahtstellen insbesondere durch Schweißen herstellbar sind. Die Schüttgutabzugstrichter können sowohl lose in das wabenförmige Traggerüst eingehängt werden, als auch mit diesem verschraubt oder verschweißt werden. In jedem Fall empfiehlt es sich, an den Trichteraußenwandungen vorzugsweise winkelförmige Auflagestücke in versetzter Anordnung vorzusehen.

Wenn der Einfachheit halber nachfolgend nur von "Trichtern" die Rede ist, so sind damit sinngemäß auch die im Querschnitt trichterförmigen Rinnen gemeint.

Die Zahl der an den Schüttgutabzugstrichtern umfangsverteilten Durchtrittsöffnungen und deren Querschnitte sowie Höhenverteilung ist grundsätzlich frei wählbar.

Die Verteilelemente sind zumindest im Bereich der Anschlußkanten der "Dachflächen" mit den Trichterseitenwänden dicht verbunden, z. B. durch durchgehende Schweißnähte. Die Verteilelemente ragen dann in den Trichterinnenraum hinein, wobei ihre "Dachfirste" vorzugsweise zur Trichtermitte hin weisen. Gemäß einer bevorzugten Ausführungsform der Erfindung sind die Verteilelemente der (ersten) Schüttgutabzugstrichter an ihren freien, d. h. von den Trichterseitenwänden fortweisenden Enden miteinander verbunden, wobei der Verbindungsbereich oberhalb der Schüttgutaustrittsmündung des Schüttgutabzugstrichters angeordnet ist. Hierdurch wird einerseits die mechanische Stabilität des Schüttgutabzugstrichters und auch der Verbindung zwischen dessen Seitenwänden und den Verteilelementen trotz geringer Materialstärken spürbar erhöht. Durch die Anordnung des Verbindungsbereiches oberhalb der Schüttgutaustrittsmündung wird darüber hinaus die Gefahr eines Kernflusses des Schüttgutes im Schüttgutaustrittsbereich der Behandlungszone des Wanderbettreaktors völlig unterbunden; im Falle einer rinnenförmigen Ausgestaltung des Anströmbodens dient hierzu vor allem ein dachförmiges Verteilelement, das sich oberhalb und parallel zur Schüttgutaustrittsmündung der Schüttgutabzugsrinne erstreckt.

Die vorerwähnten, den Kernfluß unterbindenden Maßnahmen, insbesondere in Verbindung mit den übrigen Merkmalen der Erfindung, sind also auch dann besonders vorteilhaft anwendbar, wenn Durchtrittsöffnungen für Anströmfluid fehlen und die Verteilelemente folglich nur das Schüttgut auf mehrere Teiltrichter oder trichterförmige Teilrinnen des Bodens verteilen.

Demgemäß ist nach der Erfindung die Art der Verteilvorrichtung für das Anströmfluid frei wählbar, während die aneinander angrenzenden Verteilelemente zusammen mit den Seitenwänden der Schüttgutabzugstrichter oder -rinnen Teiltrichter bilden. Dabei wird es in der Regel bevorzugt, wenn das Anströmfluid lediglich im Bereich der unteren Kanten der Verteilelemente und/oder der unteren Kanten der Schüttgutabzugstrichter oder -rinnen in die Schüttgutschicht eintritt.

Wenn das Schüttgut hinreichend grobkörnig ist, kann es von Vorteil sein, in denjenigen Bereichen der Seitenwände der Schüttgutabzugstrichter oder -rinnen, die mit dem Schüttgut in Berührung stehen, Durchtrittsöffnungen für das Anströmfluid vorzusehen. In einer besonders großen Zahl von Anwendungsfällen wird man aber solche, zumeist nur zusätzlich vorgesehene Durchtrittsöffnungen vermeiden, oder sie zumindest so ausbilden bzw. abdecken, daß Schüttgut in sie nicht eintreten kann. Derartige Abdeckungen oder besonders geformte Durchbrechungen verursachen also einen unerwünschten Mehraufwand, der aber dann erforderlich sein kann, wenn - wie sehr häufig - das Schüttgut auch Partikel mit von der Sollgröße abweichenden Kornabmessungen hat. Allein durch die mechanische Belastung beim Transport und beim Wandern der Schüttgutpartikel brechen eine mehr oder minder große Zahl von Partikeln in Bruchstücke aller Größenordnungen. Deshalb werden in den Trichterwänden vorgesehene Anströmfluid-Durchtrittsöffnungen sehr leicht zugesetzt; das ist bei den umströmten Unterkanten der dachförmigen Verteilelemente und der Trichter oder Rinnen nicht der Fall. Jedenfalls können das Trichter- bzw. Rinnengrundmaß, d. h. die Trichter- bzw. Rinnenbreite im Schüttguteintrittsbereich des Bodens bzw. die Mittenabstände benachbarter Trichter oder Rinnen im Vergleich zum Korndurchmesser des Schüttgutes außergewöhnlich groß sein. Auf diese Weise können auch außerordentlich großflächige Böden relativ preiswert und stabil sowie relativ leichtgewichtig hergestellt werden. Typische Rastergrundmaße des Trichter- bzw. Rinnenrasters betragen 100 mm bis 2000 mm. Bevorzugt werden Rastergrundmaße zwischen 300 mm und 800 mm; dies sind im Vergleich zu bekannten Anströmböden relativ grobe Rastermaße.

Die erfindungsgemäßen Schüttgutabzugstrichter können so in den Wanderbettreaktor eingebaut werden, daß ihre Schüttgutaustrittsöffnungen durch einen zweiten Boden unterhalb des Anströmbodens geführt sind, und zwar mit oder ohne rohrförmigen Verlängerungsstücken. Der Anströmboden und der darunterliegende zweite Boden bilden dann zusammen mit der Reaktorwandung einen Verteilkasten für das Anströmfluid, das in diesen Raum eingeleitet wird.

Im Falle relativ feinkörniger Schüttgüter (Wanderbettmaterial) und/oder relativ großer Wanderbetthöhen, d. h. bei günstigen Fließeigenschaften, neigen die im Schüttgutabzugsbereich unter den Verteilelementen sich ausbildenden Schüttgutoberflächen zum allmählichen sich Anheben. Um zu verhindern, daß in solchen Fällen das Schüttgut z. B. in die Fluidzuströmöffnungen überquillt, werden, gemäß einer Weiterbildung der Erfindung, schürzenähnliche Elemente, z. B. Bleche, an den Gasabströmkanten der Verteilelemente senkrecht nach unten angesetzt. Eine weitere vorteilhafte Maßnahme zur Vermeidung des "Überquellens" des Schüttgutes im Bereich der freien Schüttgutoberflächen im Boden besteht darin, unterhalb der Verteilelemente Schüttgutscheidewände vorzusehen und diese vertikal anzuordnen.

Insbesondere bei einer rinnenförmigen Anordnung des Bodens können, gemäß einer bevorzugten Ausführungsform der Erfindung, weitere dachförmige Verteilelemente, insbesondere der weiter oben erwähnten Art, vorgesehen sein, welche im Winkel, vorzugsweise im rechten Winkel, zu den übrigen Verteilelementen angeordnet und mit diesen verbunden sind. Hierdurch kann u. a. die Zahl und Größe der Schüttgutabzugsmündungen noch besser vorgegeben werden. Außerdem werden dadurch die Stabilität der Anströmrinne vergrößert und - wie weiter oben erwähnt - ein Kernfluß des Schüttgutes noch besser vermieden.

Wenn, gemäß einer Weiterbildung der Erfindung, an den oder innerhalb der Verteilelemente/n und/oder an den Schüttgutabzugstrichtern Rohre oder dergleichen mit Zuteilöffnungen zur Beaufschlagung des zu behandelnden Fluides mit einem Behandlungsmedium angeordnet sind, wird dadurch erreicht, daß die Reaktion des Behandlungsmediums mit dem zu behandelnden Fluid erst beim Kontakt des zu behandelnden Fluides mit dem Schüttgut beginnen kann. Ein weiterer Vorteil dieser Rohre, die vorzugsweise die Kanten der Verteilelemente und/oder der Schüttgutabzugstrichter (zumindest teilweise) bilden, liegt in ihrer aussteifenden Wirkung auf den Anströmboden.

Wenn die Dachneigungswinkel der Verteilelemente den Seitenwandneigungswinkeln der Seitenwände der Schüttgutabzugstrichter entsprechen, wird hierdurch ein besonders gleichmäßiger Materialfluß beim Schüttgutabzug gewährleistet. Wenngleich die Trichterseitenwände konkav, konvex oder mehrfach gebogen geformt sein können, werden (in Schüttgutwanderrichtung) plan ausgebildete Seitenwände bevorzugt. Dies gilt auch für die nach oben weisenden Seitenflächen der Verteilelemente; dabei können die von den Verteilelementen bzw. benachbarten Schüttgutabzugstrichtern gebildeten "Dachfirste" zur Schonung des Schüttgutes gerundet sein. Typische Neigungswinkel der Seitenwände und Dachflächen der Verteilelemente liegen, unter Berücksichtigung der sogenannten Reibungswinkel, in der Regel zwischen 12° und 45°, bezogen auf die Vertikale.

Hinsichtlich eines Verfahrens zum Betreiben eines erfindungsgemäßen Bodens für Wanderbettreaktoren wird vorgeschlagen, daß bei Verwendung eines derartigen Wanderbettreaktors als Schüttgut ein Adsorbtionsmittel zum Adsorbieren von zumindest einer Fluidkomponente aus einem Trägerfluid verwendet wird.

Wenn nun, gemäß einer bevorzugten Verfahrensweise der Erfindung, bei Verwendung eines derartigen Wanderbettreaktors das Schüttgut taktweise abgezogen wird und die während jedes Taktes abgezogene Schüttgutmenge der Menge der kontaminierten Bodenschicht des Schüttgutes entspricht, wird hierdurch vermieden, daß die kontaminierte Bodenschicht zu dick wird. Andererseits wird nur jeweils soviel Schüttgut abgezogen, wie es der vorerwähnte auf die Bodenschicht des Schüttgutes konzentrierte Kontaminationsvorgang erfordert. Dies ist vor allem dann von Vorteil, wenn die Standzeit des Schüttgutes im übrigen Wanderbettreaktor aufgrund der oberhalb des Bodens allgemein geringeren Kontaminationsgefahr vergleichsweise groß ist, so daß ein kontinuierlicher Schüttgutabzug einen unnötigen und u. U. auch schlecht realisierbaren Aufwand bedeuten würde.

Der erfindungsgemäße Anströmboden ist aufgrund seiner besonderen Ausgestaltung also besser als bekannte Anströmböden in der Lage, eine gleichmäßige Schüttgutanströmung und einen planparallelen Schüttgutabzug auch bei solchen Verfahren zu gewährleisten, die bisher in einem, insbesondere einstufigen, Wanderbettreaktor nicht durchführbar waren.

Die vorgenannten erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Erfindungsgegenstandes ergeben sich aus der nachfolgenden Beschreibung der Zeichnung, in der ein bevorzugter Anströmboden für Wanderbettreaktoren dargestellt worden ist. In der Zeichnung zeigen:
- Fig. 1: ein Anströmboden-Tragteil eines nicht gefüllten Wanderbettreaktors mit teilweise eingebautem Boden (Schnitt entlang der Linie I-I gemäß Fig. 2);
- Fig. 2: von demselben Wanderbettreaktor zwei schematische Vertikalschnittdarstellungen (Schnitte entlang den Linien IIa-IIa und IIb-IIb gemäß Fig. 1);
- Fig. 3: von demselben Wanderbettreaktor ein Bodenmodul (Schüttgutabzugstrichter) in Ansicht von oben (Ansicht A gemäß Fig. 2);
- Fig. 4: von demselben Wanderbettreaktor eine detaillierte Schnittdarstellung (Vertikalschnitt) eines Bodenmoduls (Schnitt entlang der Linie IV-IV gemäß Fig. 3);
- Fig. 5: eine alternative Ausführungsform eines Bodens für Wanderbettreaktoren (rinnenförmiger Boden) in Ansicht von oben (Ansicht B gemäß Fig. 6);
- Fig. 6: denselben Boden in perspektivischer Darstellung (Vertikalschnitt entlang der Linie VI-VI gemäß Fig. 5);
- Fig. 7: eine weitere alternative Ausführungsform eines Bodens für Wanderbettreaktoren mit einer zusätzlichen Beaufschlagungsvorrichtung für ein Behandlungsmedium.

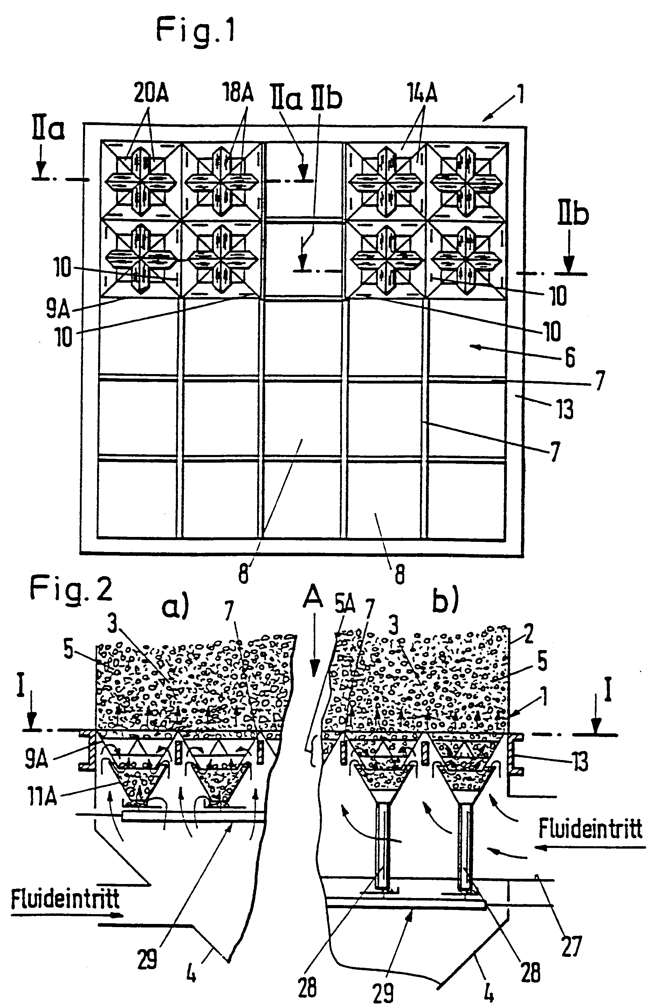

In den Fig. 1 und 2 ist die Einbausituation eines erfindungsgemäßen Bodens 1 in einen Wanderbettreaktor 2 schematisch dargestellt. Der Wanderbettreaktor 2 weist in dem hier gewählten Ausführungsbeispiel einen quadratischen Querschnitt auf und weist zumindest im Bereich der Fluidbehandlungszone 3 senkrechte Wände auf, z. B. Metallblech auf. Unterhalb des Anströmbodens 1 weist der Wanderbettreaktor 2 einen vorzugsweise trichterförmigen Reaktorboden 4 auf.

Eine Aufgabevorrichtung für Schüttgut 5, z. B. Aktivkohle, und für den Abzug des Anströmfluides (von dem Schüttgut zu behandelndes oder das Schüttgut selbst behandelnde Fluid) sind in der Zeichnung nicht eigens dargestellt, da sie nicht den Gegensand der Erfindung bilden und im übrigen allgemein bekannt sind. Die Fluidbehandlungszone 3 besteht aus einer vorzugsweise über den gesamten Reaktorquerschnitt konstanthohen Schüttgutschicht.

Unterhalb der Fluidbehandlungszone 3 ist der Reaktor durch ein rasterförmiges Traggitter 6 aus z. B. gitterförmig zusammengesetzten Flacheisen 7 in gleichgroße Fluidanström- und Schüttgutabzugsfelder 8 flächendeckend unterteilt. Bevorzugt wird das Traggitter 6 von einem Traggitterrahmen 13 gehalten, an dem der Wanderbettreaktor abgestützt und die Reaktorseitenwände sowie deren Versteifungen befestigt werden können, wobei der Traggitterrahmen mit dem Traggitter als vorgefertigtes Bauelement ausgeführt sein kann.

Mit den Fluidanström- und Schüttgutabzugsfeldern 8 im Grundriß gleichgroße (erste) Schüttgutabzugstrichter 9A sind in das Traggitter 6 eingehängt. Hierzu dienen versetzt an den Schüttgutabzugstrichtern 9A angeordnete Auflagestücke 10.

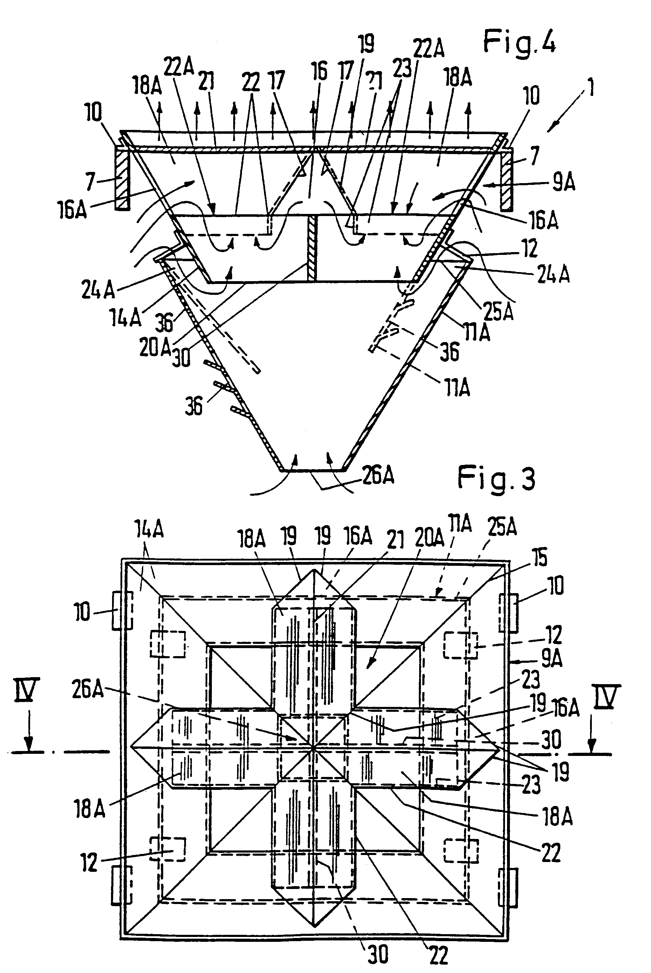

An die (ersten) Schüttgutabzugstrichter 9A sind (zweite) Schüttgutabzugstrichter 11A durch Befestigungslaschen 12 (Fig. 4) unten angehängt.

Die einzelnen, in ihrer Grundrißfläche z. B. maximal 0,6 m Kantenlänge aufweisenden Schüttgutabzugstrichter 9A und 11A sind folgendermaßen aufgebaut:

Gemäß Fig. 3 und 4 weist der jeweils erste Schüttgutabzugstrichter 9A vier gleichgroße in sich ebene Seitenwände auf, die aus Metallblech bestehen und an den Kanten 15 miteinander verschweißt sind. Jede Seitenwand 14A weist in ihrer Mitte eine dreieckige Durchtrittsöffnung 16A für Behandlungsfluid auf. An die beiden oberen Öffnungsränder 17 der Durchtrittsöffnungen 16A schließen sich unten offene dachförmige Verteilelemente 18A trichterinnenseitig derart an, daß sie zum Trichterinneren hin von den Seitenwänden 14A abstehen. Die Verteilelemente 18A bestehen aus einfachen Winkelstücken aus Metallblech, deren Neigungswinkel (bezogen auf die Senkrechte) mit den Neigungswinkeln der Seitenwände 14A übereinstimmen. Die Verteilelemente 18A sind an ihren von den Seitenwänden 14A entfernten freien Enden entlang von Berührungskanten 19 miteinander durch Schweißnähte verbunden. Dadurch sowie die mittige Anordnung der Durchtrittsöffnungen 16A an den Seitenwänden 14A befindet sich der Verbindungsbereich der Verteilelemente 18A in dem Bereich oberhalb der Schüttgutaustrittsmündungen 20A und 36A des ersten und des zweiten Schüttgutabzugstrichters 9A und 11A.

Die Firste 21 der dachförmigen Verteilelemente 18 bilden also ein rechtwinkliges Kreuz und sind bevorzugt in einer gemeinsamen Ebene angeordnet.

An die unteren Kanten 22 der Verteilelemente 18A, die mit den Seitenwänden 14A Schüttgutdurchtrittsöffnungen 22A bilden, schließen sich senkrecht angeordnete kurze Schürzen 23 aus Metallblech an, welche ein Überquellen der Schüttgutpartikel in die Durchtrittsöffnungen 16A verhindern.

Unterhalb jedes ersten Schüttgutabzugstrichters 9A ist ein zweiter Schüttgutabzugstrichter 11A unter Bildung eines Fluiddurchtrittsspaltes 24A mittels Befestigungslaschen 12 hängend angeordnet. Die Neigung der ebenfalls vier in sich ebenen Seitenwände des zweiten Schüttgutabzugstrichters 11A ist gleich den Neigungswinkeln der ersten Schüttgutabzugstrichter 9A, also z. B. etwa 20°, sie kann aber auch um z. B. 10° flacher (bezogen auf die Vertikale) sein, um die Bauhöhe der Trichtermodule möglichst klein zu halten - und zwar praktisch ohne negativen Einfluß auf die Planparallelität des Schüttgutabzuges aus der Fluidbehandlungszone; letzteres ist in Fig. 4 in der linken Figurenhälfte gestrichelt dargestellt.

Der erste Schüttgutabzugstrichter 9A ragt in den zweiten Schüttgutabzugstrichter 11A ein Stück hinein. Dadurch ist die Schüttgutaustrittsöffnung 20A des ersten Schüttgutabzugstrichters 9A tiefer als die Eintrittsöffnung 25A des zweiten Schüttgutabzugstrichters 11A angeordnet: Die dadurch bedingte Überlappung der ersten und zweiten Trichterseitenwände verhindert ein Überquellen des Schüttgutes in diesem Bereich. Das Schüttgut wird mithin ausschließlich an der Schüttgutaustrittsmündung 26A des zweiten Schüttgutabzugstrichters 11A abgezogen. Durch diese Schüttgutabzugsmündung 26A kann gewünschtenfals auch eine kleine Teilmenge des Anströmfluides zuströmen (siehe Fig. 2 - Ausführungsform (a)). Eine Zuströmung von Anströmfluid durch die Schüttgutaustrittsmündung 26A kann aber auch verhindert werden, wie in Fig. 2 in Ausführungsform (b) dargestellt ist. Im letzteren Fall ist unterhalb des Fluideintrittes ein Boden 27 im Wanderbettreaktor 2 angeordnet, durch den Schüttgutabzugsrohre 28 fluiddicht geführt sind. In jedem Fall sind Schüttgutabsperr/Fördereinrichtungen 29 unterhalb der Schüttgutaustrittsmündungen 26A angeordnet.

Vertikal angeordnete Schüttgutscheidewände 30 sind unterhalb der Verteilelemente 18A im Bedarfsfall vorgesehen und an den Seitenwänden 14A des ersten Schüttgutabzugstrichters 9A durch Schweißen befestigt.

Die von den Verteilelementen 18A nicht abgedeckte Querschnittsfläche des ersten Schüttgutabzugstrichters 9A bildet etwa im Bereich der Schürzen 23 den Fluidanströmquerschnitt jedes Trichtermoduls in die Fluidbehandlungszone 3. Dieser sollte (bezogen auf die Grundrißfläche jedes Trichtermoduls) möglichst groß sein.

Der erste Kontakt zwischen dem Anströmfluid und den Schüttgutpartikeln findet einerseits unterhalb der Verteilelemente 18A und andererseits im Fluiddurchtrittsspalt 24A zwischen den beiden ersten und zweiten Schüttgutabzugstrichtern 9A und 11A statt. Die Eintrittsfläche der Fluiddurchtrittsspalte eines Trichtermoduls sollte vorzugsweise gleichgroß wie der vorerwähnte Fluidanströmquerschnitt für die Fluidbehandlungszone sein; zumindest sollte das Flächenverhältnis zwischen 3:1 bis 1:3 betragen.

Wie aus Fig. 4 weiterhin ersichtlich - gemäß gestrichelter Darstellung in der rechten Bildhälfte - kann der zweite Schüttgutabzugstrichter 11A auch einstückig mit dem ersten Schüttgutabzugstrichter 9A gebildet sein, indem er unterhalb der Verteilelemente 18A eine Fortsetzung des ersten Schüttgutabzugstrichters 9A nach unten bildet. Darüber hinaus können weitere Durchbrechungen 36 in den Wandungen des Schüttgutabzugstrichters in diesem Bereich, also im Bereich des zweiten Schüttgutabzugstrichters, angeordnet sein; dies ist in Fig. 4 in der rechten Bildhälfte gestrichelt und in der linken Bildhälfte mit ausgezogenen Linien dargestellt. Diese fluiddurchlässigen Durchbrechungen können im Querschnitt runde, quadratische oder längliche Formen haben, also auch schlitzförmig sein, z. B. unter Verwendung gesickter Bleche. Derartige Durchbrechungen sind immer dann möglich, wenn das zu behandelnde Fluid weder mit hohen Partikelfrachten belastet ist, noch in anderer Weise zu Verstopfungen des Wanderbettreaktors, insbesondere innerhalb der Bodenschicht 5A der Schüttgutpartikel (Fig. 2), also im Bereich des Anströmbodens selbst, führen kann.

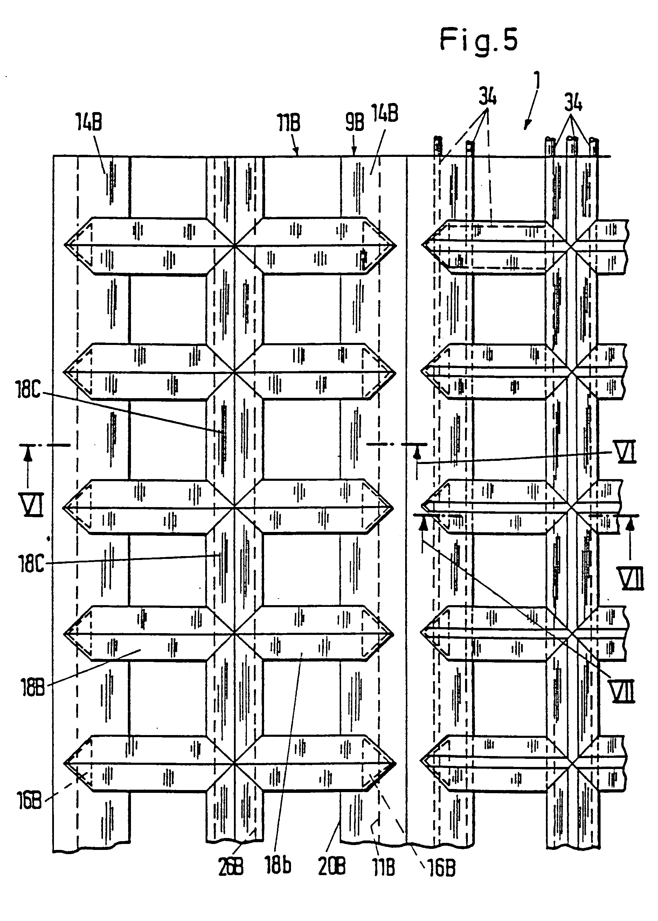

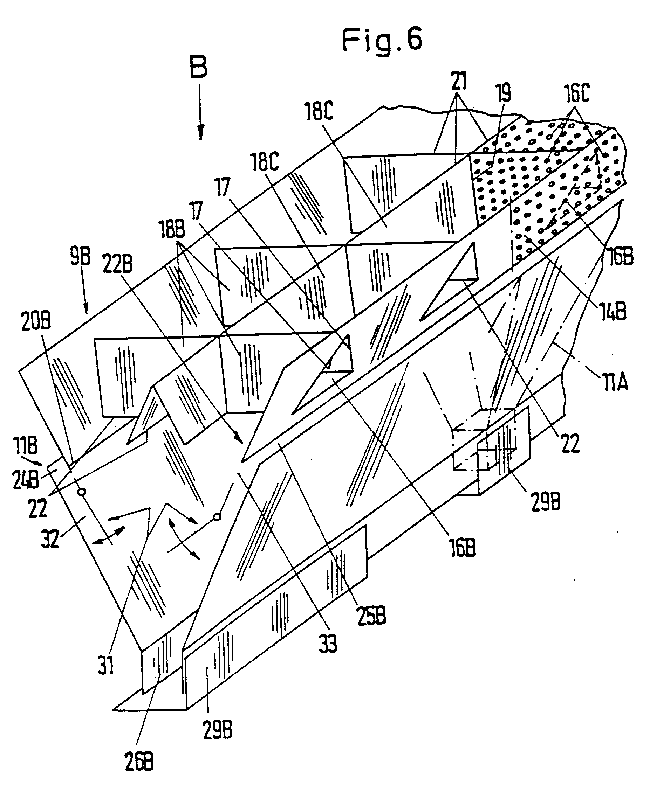

Die Ausführungsform gemäß Fig. 5 und 6 zeigt eine rinnenförmige Anordnung des Bodens, bestehend aus einer ersten Schüttgutabzugsrinne 9B und einer zweiten Schüttgutabzugsrinne 11B. Die erste Schüttgutabzugsrinne 9B weist (sinnentsprechend dem Ausführungsbeispiel in Fig. 1 bis 4) trichterförmig nach unten zusammenlaufende Seitenwände 14B mit darin vorgesehenen Durchtrittsöffnungen 16B für das zu behandelnde Fluid auf. Einander gegenüberliegende Seitenwände 14B einer ersten Schüttgutabzugsrinne 9B sind durch dachförmige Verteilelemente 18B miteinander verbunden. Seitlich benachbarte Verteilelemente 18B sind in der Rinnenmitte durch ein weiteres Verteilelement 18C mechanisch und im Sinne einer Fluidverteilung und Kernflußverhinderung miteinander verbunden. Die Verteilelemente 18B und 18C weisen untere Kanten 22 auf, die mit den Seitenwänden 14B jeder Schüttgutabzugsrinne 9B Schüttgutdurchtrittsöffnungen 22B bilden (Fig. 6).

Auch bei dieser Ausführungsform mündet eine Schüttgutaustrittsmündung 20B der ersten Schüttgutabzugsrinne 9B unter Bildung eines Fluiddurchtrittsspaltes 24B unterhalb der Eintrittsöffnung 25B der zweiten Schüttgutabzugsrinne 11B, welcher wiederum eine Schüttgutaustrittsmündung 26B aufweist, die unterhalb des Verteilelementes 18C in einer Schüttgutabsperr-Einrichtung 29B mündet. Zur Verbesserung der Fluidverteilung im Windkasten des Anströmbodens können anstelle der zweiten Schüttgutabzugsrinnen 11B auch zweite Schüttgutabzugstrichter 11A vorgesehen sein; dies ist in Fig. 6 strichpunktiert dargestellt.

Wie in Fig. 6 dargestellt, können Schüttgutleitflächen 31 innerhalb, insbesondere unterhalb, des Querschnittes der Schüttgutaustrittsmündung 20B angeordnet sein. Derartige Schüttgutleitbleche sind natürlich auch bei der Ausführungsform gemäß Fig. 1 bis 4 einsetzbar, bei der rinnenförmigen Ausführungsform gemäß Fig. 6 aber einfacher realisierbar. Diese Schüttgutleitflächen 31 können insgesamt (Fig. 6, linke Bildhälfte) oder im Bereich einer Teilfläche (Fig. 6, rechte Bildhälfte) schwenkbar sein und somit den zentralen Bereich der Schüttgutaustrittsmündung 20B der ersten Schüttgutabzugsrinne 9B mehr oder weniger stark einengen. Je flacher die Neigung der Schüttgutleitflächen 31 ist (bezüglich der Horizontalen), um so mehr öffnet sich der zwischen den Schüttgutleitflächen 31 und der zweiten Schüttgutabzugsrinne 11A gebildete Spalt 32 in Richtung auf die Schüttgutaustrittsmündung 26 B der zweiten Schüttgutabzugsrinne 11B.

Die Schüttgutleitflächen 31 können, insbesondere wenn sie insgesamt schwenkbar sind, auch unmittelbar an die erste Schüttgutabzugsrinne 9B anschließen; dies ist in Fig. 6 in der linken Bildhälfte gestrichelt dargestellt. Das Größerwerden des Spaltes 32 nach unten hin bewirkt in jedem Fall eine Erleichterung des Schüttgutabzuges aus dem Fluiddurchtrittsspalt 24B bzw. dessen von dem Spalt 32 gebildeten unteren Ende. Ein taktweise vorgenommenes Verschwenken der Schüttgutleitfläche 31 nach innen hin fördert diesen Schüttgutaustausch. Der Schüttgutaustausch im Bereich des Fluiddurchtrittspaltes 25B kann aber auch permanent verbessert werden, indem zwischen der Schüttgutleitfläche 31 und der Schüttgutaustrittsmündung 20B der ersten Schüttgutabzugsrinne 9B ein Schüttgut- und Fluid-Durchtrittsspalt 33 vorgesehen ist (Fig. 6, rechte Figurenhälfte). Durch diesen Spalt können die Schüttgutpartikel nämlich relativ leicht in den Spalt 32 zwischen der zweiten Schüttgutabzugsrinne 11B und der Schüttgutleitfläche 31 abwandern. Diese Schüttgutpartikelbewegung fördert den Schüttgutaustausch im Bereich des Fluiddurchtrittsspaltes 24B.

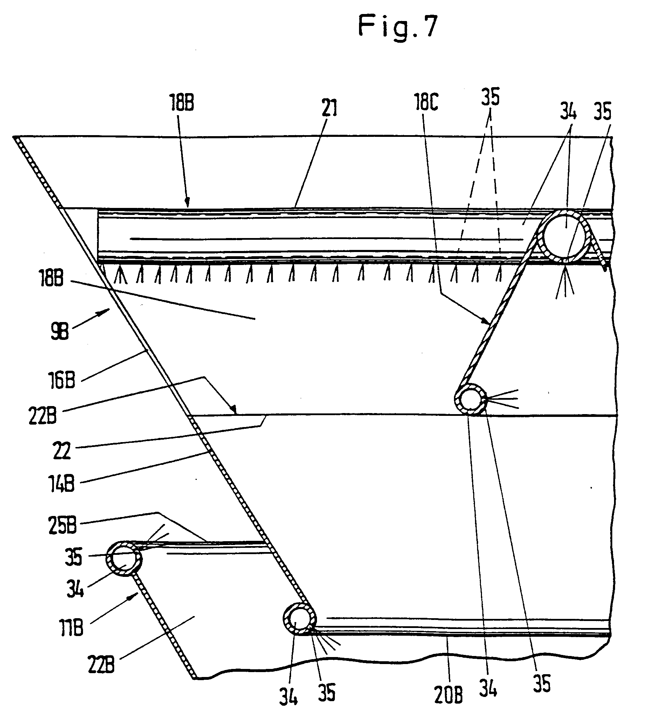

In Fig. 6 sind in der äußersten rechten obersten Bildhälfte rechts neben der strichdoppelpunktierten Linie weitere alternative Ausführungsformen der Erfindung hinsichtlich des Fluideintrittes in die Fluidbehandlungszone dargestellt, die selbstverständlich auch bei den übrigen Ausführungsformen realisiert werden können. Diese Alternativen betreffen einerseits die Verwendung von Lochblechen für die Rinnenseitenwände 14B (bzw. die Trichterseitenwände 14A im Falle von trichterförmigen Schüttgutabzugselementen) und/oder für die dachförmigen Verteilelemente 18B und/oder 18C (bzw. 18A bei trichterförmigen Schüttgutabzugselementen). Derartige Lochbleche können alternativ oder - wie bevorzugt - kumulativ zu den bereits erläuterten Durchtrittsöffnungen 16B verwendet werden. Die Durchtrittsöffnung 16B ist im oberen rechten Bereich der Fig. 6 lediglich gestrichelt dargestellt, um die alternative Verwendungsart verschiedener Durchtrittsöffnungen zu veranschaulichen. Die Löcher der Lochbleche werden in der Figur allgemein als Durchtrittsöffnungen 16C bezeichnet. Die Verwendung der Lochbleche mit Durchtrittsöffnungen 16C ist dazu geeignet, die Fluideintrittsgeschwindigkeit im Bereich des Anströmbodens zu reduzieren. - Andererseits kann aber auch auf die Durchtrittsöffnungen 16A bzw. 16B und 16C völlig verzichtet werden, wenn auf andere Weise sichergestellt wird, daß das Anströmfluid zumindest im Bereich der Schüttgutaustrittsmündungen 20A bzw. 20B sowie im Bereich der unteren Kanten 22 in die Fluidbehandlungszone eintreten kann. Eine derartige Zuführung des Anströmfluids kann z. B. mittels Rohren 34 mit Zuteilöffnungen 35 erfolgen, wie sie unter Bezugnahme auf Fig. 7 nachfolgend im Zusammenhang mit der Verwendung für zusätzliche Fluide beschrieben werden.

Die erfindungsgemäßen Bauteile sind also in einem außerordentlich großen Umfang im Rahmen der Erfindung miteinander kombinierbar - was auch für die verschiedenen erfindungsgemäßen Möglichkeiten gilt, einen erfindungsgemäßen Wanderbettreaktor zu betreiben.

Aus Fig. 7, sowie Fig. 5, rechte Figurenhälfte, ergibt sich, daß an verschiedenen Stellen des Bodens 1 Rohre 34 oder ähnliche Verteilelemente für Behandlungsmedien oder dergleichen angeordnet sein können, die mit Zuteilöffnungen 35 versehen sind, durch welche ein solches Behandlungsmedium dem zu behandelnden Fluid unmittelbar vor dessen Eintritt in das Schüttgut zugeführt werden kann. Z. B. kann hierdurch NH₃ einem NOₓ - und gegebenenfalls zusätzlich auch noch SOₓ - beladenen Feuerungsrauchgas beigemischt werden - wie weiter oben beschrieben.

Derartige Rohre versteifen den Boden 1 in vorteilhafter Weise und schaffen im Bereich von Kanten, an denen sie bevorzugt angeordnet sind, abgerundete und damit günstige Querschnitte. Bevorzugt sind diese Rohre 34 im Bereich der Firste 21 und unteren Kanten 22 der durchgehenden Verteilelemente 18C, aber auch im Bereich insbesondere der Firste der Verteilelemente 18B (oder 18A) angeordnet. Weiterhin empfiehlt sich die Anordnung solcher Rohre 34 im Bereich der Schüttgutaustrittsmündung der ersten Schüttgutabzugstrichter/-rinnen und im Bereich der Eintrittsöffnungen der zweiten Schüttgutabzugstrichter/-rinnen. Solche Rohre können, wie in Fig. 7 links oben dargestellt, auch tot enden. Die Zuteilöffnungen 35 sind vorzugsweise so angeordnet, daß sie nicht im Schüttgut liegen oder zumindest vom Schüttgut nicht ohne weiteres versperrt werden können.

Ein solcher Boden ist z. B. auch für die Anwendung in einem mehrstufigen Wanderbettreaktor geeignet, bei dem mehrere erfindungsgemäße Böden übereinander angeordnet sind und bei dem die Schüttgutaustrittsmündungen des jeweils höheren Bodens bzw. an diese Austrittsmündungen angesetzte Rohre oder Schächte als Schüttgutzuteilelemente für das darunter liegende Teilbett des Wanderbettreaktors dienen. Das Schüttgut durchwandert dann alle Teilbetten von oben nach unten. Ebenso kann das (zu behandelnde) Anströmfluid diese Teilbetten von unten nach oben durchströmen. Jedes Teilbett kann aber auch von einem separaten Anströmfluid durchströmt werden; hierzu ist es dann erforderlich, die erwähnten Schüttgutzuteilelemente durch einen ansonsten geschlossenen Zwischenboden des Wanderbettreaktors zu führen und unterhalb dieses (dieser) Zwischenbodens/böden einen Fluidaustritt und für den darüber liegenden Anströmboden einen eigenen Fluidzutritt vorzusehen. - Die Windkästen unter den Böden, die Fluidabströmräume oberhalb der Teilbetten, sowie die gegenseitige Zuordnung der Schüttgutzuteilelemente zu den darunter liegenden Schüttgutabzugsöffnungen der Teilbetten können in ähnlicher Weise vorgesehen sein, wie in der WO 87/00768.

### Bezugszeichenliste:

- 1: Boden
- 2: Wanderbettreaktor
- 3: Fluidbehandlungszone
- 4: Reaktorboden
- 5: Schüttgut
- 5A: Bodenschicht
- 6: Traggitter
- 7: Flacheisen
- 8: Fluidanström- und Schüttgutabzugsfelder
- 9A: erste Schüttgutabzugstrichter
- 9B: erste Schüttgutabzugsrinnen
- 10: Auflagestücke
- 11A: zweite Schüttgutabzugstrichter
- 11B: zweite Schüttgutabzugsrinnen
- 12: Befestigungslaschen
- 13: Traggitterrahmen
- 14A: Seitenwände
- 14B: Seitenwände
- 15: Kanten
- 16A: Durchtrittsöffnungen
- 16B: Durchtrittsöffnungen
- 16C: Durchtrittsöffnungen
- 17: Öffnungsränder
- 18A: Verteilelemente
- 18B: Verteilelemente
- 18C: Verteilelemente
- 19: Berührungskanten
- 20A: Schüttgutaustrittsmündung
- 20B: Schüttgutaustrittsmündung
- 21: Firste
- 22: untere Kanten
- 22A: Schüttgutdurchtrittsöffnungen
- 22B: Schüttgutdurchtrittsöffnungen
- 23: Schürzen
- 24A: Fluiddurchtrittsspalt
- 24B: Fluiddurchtrittsspalt
- 25A: Eintrittsöffnung
- 25B: Eintrittsöffnung
- 26A: Schüttgutaustrittsmündung
- 26B: Schüttgutaustrittsmündung
- 27: Boden
- 28: Schüttgutabzugsrohre
- 29: Schüttgutabsperr/Förder-Einrichtungen
- 29B: Schüttgutabsperr-Einrichtung
- 30: Schüttgutscheidewände
- 31: Schüttgutleitflächen
- 32: Spalt
- 33: Schüttgut- und Fluid-Durchtrittsspalt
- 34: Rohre
- 35: Zuteilöffnung
- 36: Durchbrechungen
- A: Ansicht
- B: Ansicht

## Patentansprüche

1. Boden für Wanderbettreaktoren, insbesondere mit einer Verteileinrichtung für Anströmfluid, bei dem
a) der Boden aus zumindest nebeneinander anzuordnenden oder angeordneten Schüttgutabzugstrichtern (9A oder 9A und 11A) oder aus zumindest einer trichterförmigen Schüttgutabzugsrinne (9B oder 9B und 11B) besteht,
b) die Schüttgutabzugstrichter (9A oder 9A und 11A) oder die Schüttgutabzugsrinnen (9B oder 9B und 11B) mit Schüttgutaustrittsmündungen (26A bzw. 26B) unmittelbar oder mittelbar versehen sind,
c) innerhalb jedes Schüttgutabzugstrichters (9A oder 9A und 11A) oder innerhalb jeder Schüttgutabzugsrinne (9B oder 9B und 11B) dachförmige Verteilelemente (18A, 18B, 18C) oberhalb jeder Schüttgutaustrittsmündung (26A bzw. 26B) derart angeordnet sind, daß sie zumindest den zentralen, vorzugsweise den gesamten, Flächenbereich der Schüttgutaustrittsmündung (26A bzw. 26B) dachähnlich überdecken und
d) die Verteilelemente (18A, 18B, 18C) untere Kanten (22) aufweisen, die mit den Seitenwänden (14A bzw. 14B) jedes (ersten) Schüttgutabzugstrichters (9A) oder jeder (ersten) Schüttgutabzugsrinne (9B) Schüttgutdurchtrittsöffnungen (22A bzw. 22B), vorzugsweise in einer einzigen Horizontalebene, bilden, und bei dem
e) die Verteilelemente (18A, 18B, 18C) trichterinnenseitig bzw. rinneninnenseitig von den Seitenwänden (14A bzw. 14B) zum Trichterinneren bzw. Rinneninneren hin abstehen und über den Trichterumfang bzw. entlang der Rinne verteilt angeordnet sind.

2. Boden nach Anspruch 1, dadurch gekennzeichnet, daß die Schüttgutaustrittsmündungen (26A bzw. 26B), ggf. mittels eines Schüttgutabzugsrohres (28), durch einen ansonsten geschlossenen Boden (27) geführt sind.

3. Boden nach Anspruch 1 oder 2, dadurch gekennzeichnet, daß die Verteilelemente (18A bzw. 18B) miteinander verbunden sind, vorzugsweise oberhalb der Schüttgutaustrittsmündung (20A bzw. 20B) des ersten Schüttgutabzugstrichters (9A) bzw. der ersten Schüttgutabzugsrinne (9B).

4. Boden nach Anspruch 3, dadurch gekennzeichnet, daß insbesondere bei einer rinnenförmigen Ausgestaltung, weitere dachförmige Verteilelemente (18C) vorgesehen sind, welche im Winkel zu den übrigen Verteilelementen (18A bzw. 18B) angeordnet und mit diesen im Sinne einer weiteren Fluidverteilung verbunden sind.

5. Boden nach einem der Ansprüche 1 bis 4, dadurch gekennzeichnet, daß sich an die unteren Kanten (22) der Verteilelemente (18A; 18B; 18C) etwa senkrecht angeordnete Schürzen (23) anschließen.

6. Boden nach einem der Ansprüche 1 bis 5, dadurch gekennzeichnet, daß unterhalb jedes ersten Schüttgutabzugstrichters (9A) bzw. jeder ersten Schüttgutabzugsrinne (9B) mindestens ein zweiter Schüttgutabzugstrichter (11A) bzw. eine zweite Schüttgutabzugsrinne (11B), ggf. unter Bildung eines Fluiddurchtrittsspaltes (24A bzw. 24B) angeordnet ist.

7. Boden nach Anspruch 6, dadurch gekennzeichnet, daß die Schüttgutaustrittsmündung (20A bzw. 20B) des ersten Schüttgutabzugstrichters (9A) bzw. der ersten Schüttgutabzugsrinne (9B) tiefer als die Eintrittsöffnung (25A bzw. 25B) des zweiten Schüttgutabzugstrichters (11A) bzw. der zweiten Schüttgutabzugsrinne (11B) angeordnet ist.

8. Boden nach einem der Ansprüche 1 bis 7, gekennzeichnet durch vertikal und unterhalb der Verteilelemente (18A bzw. 18) angeordnete Schüttgutscheidewände (30).

9. Boden nach einem der Ansprüche 1 bis 8, gekennzeichnet durch ein rasterförmiges Traggitter (6) zur Aufnahme fertig montierte Module bildender Schüttgutabzugstrichter (9A, 11A).

10. Boden nach Anspruch 9, gekennzeichnet durch einen das Traggitter (6) haltenden Traggitterrahmen (13).

11. Boden nach einem der Ansprüche 6 bis 10, gekennzeichnet durch Schüttgutleitflächen (31) die bezüglich der Schüttgutwanderrichtung innerhalb des Querschnittes der Schüttgutaustrittsmündung (20A bzw. 20B) des ersten Schüttguttrichters (9A) bzw. der ersten Schüttgutabzugsrinne (9B) angeordnet sind.

12. Boden nach Anspruch 11, dadurch gekennzeichnet, daß die Schüttgutleitflächen (31) einen nach unten sich erweiternden Spalt (32) mit je einer Wandfläche des zweiten Schüttgutabzugstrichters (11A) bzw. der zweiten Schüttgutabzugsrinne (11B) bilden.

13. Boden nach Anspruch 11 oder 12, dadurch gekennzeichnet, daß die Schüttgutleitflächen (31) zumindest partiell bewegbar sind.

14. Boden nach einem der Ansprüche 11 bis 13, dadurch gekennzeichnet, daß die Schüttgutleitflächen (31) mit der Schüttgutaustrittsmündung (20B) einen Schüttgut- und Fluid-Durchtrittsspalt (33) bilden.

15. Boden nach einem der Ansprüche 1 bis 14, dadurch gekennzeichnet, daß an den oder innerhalb der Verteilungselemente(n) (18A; 18B; 18C) und/oder Schüttgutabzugstrichter(n) oder -rinnen (9A; 9B; 11A; 11B) Rohre (34) oder dergleichen mit Zuteilöffnungen (35) zur Beaufschlagung des zu behandelnden Fluides mit einem Behandlungsmedium angeordnet sind.

16. Boden nach Anspruch 15, dadurch gekennzeichnet, daß das Rohr (34) den First und/oder zumindest eine Kante des Verteilelementes (18A; 18B; 18C) und/oder der Schüttgutabzugstrichter oder -rinnen (9A; 9B; 11A; 11B) bildet oder sich entlang dessen erstreckt.

17. Boden nach einem der Ansprüche 1 bis 16, dadurch gekennzeichnet, daß die Dachneigungswinkel der Verteilelemente (18A bzw. 18B) den Seitenwandneigungswinkeln des ersten Schüttgutabzugstrichters bzw. der ersten Schüttgutabzugsrinne entsprechen und, vorzugsweise, kleiner oder gleich dem Reibungswinkel des Schüttgutes mit der betreffenden Wandfläche sind.

18. Boden nach einem der Ansprüche 1 bis 17, dadurch gekennzeichnet, daß die Breite der (ersten) Schüttgutabzugstrichter oder -rinnen (9A oder 9B) oder der Mittenabstand benachbarter (erster) Schüttgutabzugstrichter oder -rinnen (9A oder 9B) 100 mm bis 2000 mm, vorzugsweise 300 mm bis 800 mm, beträgt.

19. Boden nach einem der Ansprüche 1 bis 18, gekennzeichnet durch Durchtrittsöffnungen (16C) für Anströmfluid in denjenigen Bereichen der Seitenwände (14A oder 14B) der (ersten) Schüttgutabzugstrichter oder -rinnen (9A oder 9B), welche mit dem Schüttgut (5) in Berührung stehen.

20. Boden nach einem der Ansprüche 1 bis 19, dadurch gekennzeichnet, daß die Verteilelemente (18A bzw. 18B) zumindest im Bereich der Anschlußkanten, der Dachflächen mit den Trichter- oder Rinnenwänden dicht verbunden sind.

21. Boden nach einem der Ansprüche 1 bis 20, dadurch gekennzeichnet, daß die unteren Kanten der Verteilelemente (18A bzw. 18B) von einem Anströmfluid umströmbar sind.

22. Wanderbettreaktor mit einem ersten Boden nach einem der Ansprüche 1 bis 21, gekennzeichnet durch einen zweiten oder weitere Böden nach einem der Ansprüche 1 bis 21, welcher/welche über oder unter dem ersten Boden angeordnet ist/sind.

23. Verfahren zum Betreiben eines Bodens für Wanderbettreaktoren nach einem der Ansprüche 1 bis 22, dadurch gekennzeichnet, daß bei Verwendung eines derartigen Wanderbettreaktors das Schüttgut taktweise abgezogen wird und ggf. die während eines Taktes abgezogene Schüttgutmenge der Menge der kontaminierten Bodenschicht des Schüttgutes entspricht.

24. Verfahren zum Behandeln von Fluiden an Schüttgütern in mindestens einem Wanderbettreaktor mit mindestens einem Boden, dadurch gekennzeichnet, daß als Boden mindestens ein Boden nach einem der Ansprüche 1 bis 23 verwendet wird.

25. Verfahren nach Anspruch 24, dadurch gekennzeichnet, daß in demselben Wanderbettreaktor mehrere übereinander angeordnete Böden nach einem oder mehreren der Ansprüche 1 bis 23 unter Ausbildung von mehreren Wanderbetten verwendet werden.

## Claims

1. A deck for moving bed reactors, in particular having a distribution arrangement for inflowing fluid, wherein
a) the deck comprises at least bulk material discharge funnels (9A or 9A and 11A) arranged or to be arranged side by side or at least one funnel-shaped bulk material discharge channel (9B or 9B and 11B),
b) the bulk material discharge funnels (9A or 9A and 11A) or the bulk material discharge channels (9B or 9B and 11B) are directly or indirectly provided with bulk material outlet openings (26A, 26B),
c) inside each bulk material discharge funnel (9A or 9A and 11A) or inside each bulk material discharge channel (9B or 9B and 11B), roof-shaped distribution members (18A, 18B, 18C) are arranged above each bulk material outlet opening (26A, 26B) in such a manner that they cover at least the central, preferably the entire area of the bulk material outlet opening (26A, 26B) in the manner of a roof, and
d) the distribution members (18A, 18B, 18C) have lower edges (22) which, together with the sidewalls (14A, 14B) of each (first) bulk material discharge funnel (9A) or each (first) bulk material discharge channel (9B), form bulk material passage openings (22A, 22B), preferably in a single horizontal plane, and wherein
e) the distribution members (18A, 18B, 18C) project into the funnel interior or the channel interior from the sidewalls (14A, 14B) on the inside of the funnel or channel and are distributed over the periphery of the funnel or along the channel.

2. A deck according to claim 1, characterised in that the bulk material outlet openings (26A, 26B) are guided through an otherwise closed deck (27), optionally by means of a bulk material discharge pipe (28).

3. A deck according to claim 1 or 2, characterised in that the distribution members (18A, 18B) are interconnected, preferably above the bulk material outlet opening (20A, 20B) of the first bulk material discharge funnel (9A) or the first bulk material discharge channel (9B).

4. A deck according to claim 3, characterised in that, in particular in a channel-type structure, further roof-shaped distribution members (18C) are provided which are arranged at an angle to the other distribution members (18A, 18B) and are connected thereto for the purpose of further fluid distribution.

5. A deck according to any one of claims 1 to 4, characterised in that substantially vertically arranged aprons (23) adjoin the lower edges (22) of the distribution members (18A, 18B, 18C).

6. A deck according to any one of claims 1 to 5, characterised in that at least one second bulk material discharge funnel (11A) or one second bulk material discharge channel (11B) is arranged below each first bulk material discharge funnel (9A) or each first bulk material discharge channel (9B), optionally forming a fluid passage gap (24A, 24B).

7. A deck according to claim 6, characterised in that the bulk material outlet opening (20A, 20B) of the first bulk material discharge funnel (9A) or the first bulk material discharge channel (9B) is arranged lower than the inlet opening (25A, 25B) of the second bulk material discharge funnel (11A) or the second bulk material discharge channel (11B).

8. A deck according to any one of claims 1 to 7, characterised by bulk material dividing walls (30) arranged vertically below the distribution members (18A, 18).

9. A deck according to any one of claims 1 to 8, characterised by a grid-type supporting lattice (6) for receiving bulk material discharge funnels (9A, 11A) forming ready-assembled modules.

10. A deck according to claim 9, characterised by a supporting-lattice frame (13) holding the supporting lattice (6).

11. A deck according to any one of claims 6 to 10, characterised by bulk material guide surfaces (31) which, relative to the direction of travel of the bulk material, are arranged within the cross-sectional area of the bulk material outlet opening (20A, 20B) of the first bulk material funnel (9A) or the first bulk material discharge channel (9B).

12. A deck according to claim 11, characterised in that the bulk material guide surfaces (31), together with a respective wall surface of the second bulk material discharge funnel (11A) or the second bulk material discharge channel (11B), form a downwardly widening gap (32).

13. A deck according to claim 11 or 12, characterised in that the bulk material guide surfaces (31) are at least partially movable.

14. A deck according to any one of claims 11 to 13, characterised in that the bulk material guide surfaces (31), together with the bulk material outlet opening (20B), form a bulk material and fluid passage gap (33).

15. A deck according to any one of claims 1 to 14, characterised in that pipes (34) or the like, having feed openings (35) for supplying a treatment medium to the fluid to be treated, are arranged on or inside the distribution members (18A, 18B, 18C) and/or bulk material discharge funnels or channels (9A, 9B, 11A, 11B).

16. A deck according to claim 15, characterised in that the pipe (34) forms the ridge and/or at least one edge of the distribution member (18A, 18B, 18C) and/or bulk material discharge funnels or channels (9A, 9B, 11A, 11B) or extends therealong.

17. A deck according to any one of claims 1 to 16, characterised in that the roof inclination angles of the distribution members (18A, 18B) correspond to the sidewall inclination angles of the first bulk material discharge funnel or the first bulk material discharge channel and, preferably, are smaller than or equal to the friction angle of the bulk material with the relevant wall surface.

18. A deck according to any one of claims 1 to 17, characterised in that the width of the (first) bulk material discharge funnels or channels (9A or 9B) or the centre-to-centre distance between adjacent (first) bulk material discharge funnels or channels (9A or 9B) is 100mm to 2000mm, preferably 300mm to 800mm.

19. A deck according to any one of claims 1 to 18, characterised by passage openings (16C) for inflowing fluid in those regions of the sidewalls (14A or 14B) of the (first) bulk material discharge funnels or channels (9A or 9B) in contact with the bulk material (5).

20. A deck according to any one of claims 1 to 19, characterised in that the distribution members (18A, 18B) are connected to the funnel or channel walls in a sealed manner at least in the region of the connecting edges of the roof surfaces.

21. A deck according to any one of claims 1 to 20, characterised in that an inflowing fluid can flow round the lower edges of the distribution members (18A, 18B).

22. A moving bed reactor having a first deck according to any one of claims 1 to 21, characterised by a second or further decks according to any one of claims 1 to 21 arranged above or below the first deck.

23. A method of operating a deck for moving bed reactors according to any one of claims 1 to 22, characterised in that, when using a moving bed reactor of this type, the bulk material is discharged in cycles and, optionally, the amount of bulk material discharged during one cycle corresponds to the amount of the contaminated bottom layer of the bulk material.

24. A method for the treatment of fluids on bulk materials in at least one moving bed reactor having at least one deck, characterised in that, as a deck, at least one deck according to any one of claims 1 to 23 is used.

25. A method according to claim 24, characterised in that a plurality of decks according to one or more of claims 1 to 23 and arranged one above another are used in the same moving bed reactor to form a plurality of moving beds.

## Revendications

1. Plaque de fond pour réacteurs à lit mobile, en particulier comprenant un dispositif distributeur pour le fluide en écoulement, pour lequel
a) la plaque de fond se compose au moins d'entonnoirs de décharge de la matière en vrac (9A ou 9A et 11A) disposés ou à disposer les uns à côté des autres ou au moins d'une rigole de décharge de la matière en vrac en forme d'entonnoir (9B ou 9B et 11B),
b) les entonnoirs de décharge de la matière en vrac (9A ou 9A et 11A) ou les rigoles de décharge de la matière en vrac (9B ou 9B et 11B) sont munis directement ou indirectement d'embouchures de sortie de la matière en vrac (26A respectivement 26b),
c) à l'intérieur de chaque entonnoir de décharge de la matière en vrac (9A ou 9A et 11A) ou à l'intérieur de chaque rigole de décharge de la matière en vrac (9B ou 9B et 11B), des éléments distributeurs en forme de toit (18A, 18B, 18C) sont disposés au-dessus de chaque embouchure de sortie de la matière en vrac (26A respectivement 26b), de manière à recouvrir, à la manière d'un toit, au moins la zone centrale, de préférence, toute la zone de surface de l'embouchure de sortie de la matière en vrac (26A respectivement 26b) et
d) les éléments distributeurs (18A, 18B, 18C) présentent des bords inférieurs (22) qui forment avec les parais latérales (14A respectivement 14b) de chaque (premier) entonnoir de décharge de la matière en vrac (9A) ou de chaque première rigole de décharge de la matière en vrac (9B), des orifices de passage de la matière en vrac (22A respectivement 22B), de préférence dans un plan horizontal unique, et plaque de fond pour laquelle
e) les éléments distributeurs (18A, 18B, 18C) font saillie, côté interne de l'entonnoir respectivement côté interne de la rigole, des parois latérales (14A respectivement 14B) en direction de l'intérieur de l'entonnoir respectivement en direction de l'intérieur de la rigole et sont répartis sur la périphérie de l'entonnoir respectivement le long de la rigole.

2. Plaque de fond selon la revendication 1, caractérisée en ce que les embouchures de sortie de la matière en vrac (26A respectivement 26B) sont guidées, éventuellement au moyen d'un tube de décharge de la matière en vrac (28), à travers une plaque de fond (27) normalement fermée.

3. Plaque de fond selon la revendication 1 ou 2, caractérisée en ce que les éléments distributeurs (18A respectivement 18B) sont reliés entre eux, de préférence, au-dessus de l'embouchure de sortie de la matière en vrac (20A respectivement 20B) du premier entonnoir de décharge de la matière en vrac (9A) respectivement de la première rigole de décharge de la matière en vrac (9B).

4. Plaque de fond selon la revendication 3, caractérisée en ce qu'en particulier dans une configuration en rigole, il est prévu d'autres éléments distributeurs (18C) en forme de toit qui sont disposés suivant un angle par rapport aux autres éléments distributeurs (18A respectivement 18B) et qui sont reliés avec ces derniers dans le sens d'une distribution supplémentaire du fluide.

5. Plaque de fond selon l'une des revendications 1 à 4, caractérisée en ce que les bords inférieurs (22) des éléments distributeurs (18A ; 18B ; 18C) se prolongent par des tabliers (23) approximativement verticaux.

6. Plaque de fond selon l'une des revendications 1 à 5, caractérisée en ce qu'en amant de chaque premier entonnoir de décharge de la matière en vrac (9A) respectivement de chaque première rigole de décharge de la matière en vrac (9B) est disposé au moins un second entonnoir de décharge de la matière en vrac (11A) respectivement une seconde rigole de décharge de la matière en vrac (11B), en formant éventuellement une fente de passage de fluide (24A respectivement 24B).

7. Plaque de fond selon la revendication 6, caractérisée en ce que l'embouchure de sortie de la matière en vrac (20A respectivement 20B) du premier entonnoir de décharge de la matière en vrac (9A) respectivement de la première rigole de décharge de la matière en vrac (9B) est disposée plus bas que l'orifice d'entrée (25A respectivement 25B) du second entonnoir de décharge de la matière en vrac (11A) respectivement de la seconde rigole de décharge de la matière en vrac (11B).

8. Plaque de fond selon l'une des revendications 1 à 7, caractérisée par des parois de séparation de la matière en vrac (30) disposées verticalement et en aval des éléments distributeurs (18A respectivement 18).

9. Plaque de fond selon l'une des revendications 1 à 8, caractérisée par une grille de support en forme de réseau (6) pour le logement d'entonnoirs de décharge de la matière en vrac (9A, 11A) formant des modules prémontés.

10. Plaque de fond selon la revendication 9, caractérisée par un cadre (13) maintenant la grille de support (6).

11. Plaque de fond selon l'une des revendications 6 à 10, caractérisée par des surfaces conductrices de la matière en vrac (31), qui sont disposées, par rapport au sens de déplacement de la matière en vrac, à l'intérieur de la section transversale de l'embouchure de sortie de la matière en vrac (20A respectivement 20B) du premier entonnoir de décharge de la matière en vrac (9A) respectivement de la première rigole de décharge de la matière en vrac (9B).

12. Plaque de fond selon la revendication 11, caractérisée en ce que les surfaces conductrices de la matière en vrac (31) forment une fente (32) s'élargissant vers le bas comprenant une surface de paroi du second entonnoir de décharge de la matière en vrac (11A) respectivement de la seconde rigole de décharge de la matière en vrac (11b).

13. Plaque de fond selon la revendication 11 ou 12, caractérisée en ce que les surfaces directrices de la matière en vrac (31) sont mobiles au moins partiellement.

14. Plaque de fond selon l'une des revendications 11 à 13, caractérisée en ce que les surfaces directrices de la matière en vrac (31) forment, avec l'embouchure de sortie de la matière en vrac (20B), une fente de passage (33) du fluide et de la matière en vrac.

15. Plaque de fond selon l'une des revendications 1 à 14, caractérisée en ce que, sur ou à l'intérieur du ou des éléments distributeurs (18A ; 18B ; 18C) et/ou du/des entonnoirs ou rigoles de décharge de la matière en vrac (9A ; 9B ; 11A ; 11B), sont disposés des tubes (34) ou similaires présentant des ouvertures de répartition (35) pour l'entrée en contact du fluide à traiter avec un milieu de traitement.

16. Plaque de fond selon la revendication 15, caractérisée en ce que le tube (34) forme le faîte et/ou au moins un bord de l'élément distributeur (18A ; 18B ; 18C) et/ou des entonnoirs ou rigoles de décharge de la matière en vrac (9A ; 9B ; 11A ; 11B) ou bien s'étend le long de ce dernier.

17. Plaque de fond selon l'une des revendications 1 à 16, caractérisée en ce que les angle d'inclinaison de toit des éléments distributeurs (18A respectivement 18B) correspondent aux angles d'inclinaison des parois latérales du premier entonnoir de décharge de la matière en vrac respectivement de la première rigole de décharge de la matière en vrac et, de préférence, sont plus petits que ou égaux à l'angle de frottement de la matière en vrac avec la surface de paroi concernée.

18. Plaque de fond selon l'une des revendications 1 à 17, caractérisée en ce que la largeur des premiers entonnoirs ou rigoles de décharge de la matière en vrac (9A ou 9B) ou la distance médiane des (premiers) entonnoirs voisins ou rigoles de décharge de la matière en vrac (9A ou 9B) est de l'ordre de 100 mm à 2000 mm, de préférence 300 mm à 800 mm.

19. Plaque de fond selon l'une des revendications 1 à 18, caractérisée par des orifices de passage (16C) pour le fluide d'écoulement dans les zones des parois latérales (14A ou 14B) des (premiers) entonnoirs ou rigoles de décharge de la matière en vrac (9A ou 9B) qui sont en contact avec la matière en vrac (5).

20. Plaque de fond selon l'une des revendications 1 à 19, caractérisée en ce que les éléments distributeurs (18A respectivement 18B) sont reliés aux parois de rigoles ou d'entonnoirs au moins dans la zone des bords de raccordement et des surfaces de toit.

21. Plaque de fond selon l'une des revendications 1 à 20, caractérisée en ce que les bords inférieurs des éléments distributeurs (18A respectivement 18B) sont pris dans l'écoulement d'un fluide.

22. Réacteur à lit mobile avec une première plaque de fond selon l'une des revendications 1 à 21, caractérisé par une seconde plaque de fond ou des plaques de fond supplémentaires selon l'une des revendications 1 à 21, laquelle/lesquelles est/sont disposée(s) au-dessus ou en dessous de la première plaque de fond.

23. Procédé pour l'utilisation d'une plaque de fond pour réacteurs à lit mobile selon l'une des revendications 1 à 22, caractérisé en ce qu'au cours de l'utilisation d'un tel réacteur à lit mobile, la matière en vrac est déchargée de manière cyclique et éventuellement la quantité de matière en vrac déchargée pendant un cycle correspond à la quantité de la couche de sol contaminée de la matière en vrac.

24. Procédé pour le traitement de fluides dans des matières en vrac dans au moins un réacteur à lit mobile comprenant au moins une plaque de fond, caractérisé en ce que la plaque de fond employée est une plaque de fond selon l'une des revendications 1 à 23.

25. Procédé selon la revendication 24, caractérisé en ce que dans le même réacteur à lit mobile, sont utilisées plusieurs plaques de fond disposées les unes au-dessus des autres selon une ou plusieurs des revendications 1 à 23 en formant plusieurs lits mobiles.
